# EUROPÄISCHE PATENTSCHRIFT

(11) **EP 4 112 406 B1**
(45) Veröffentlichungstag und Bekanntmachung des Hinweises auf die Patenterteilung: **14.02.2024**
(21) Anmeldenummer: 22179333.4
(22) Anmeldetag: 15.06.2022
(51) Int. Cl.: B60W 30/12, B60W 30/18

(54) **VERFAHREN ZUM DURCHFÜHREN EINES SPURWECHSELS AUF EINEM VERZÖGERUNGSSTREIFEN MITTELS EINES ASSISTENZSYSTEMS, COMPUTERPROGRAMMPRODUKT SOWIE ASSISTENZSYSTEM**
METHOD FOR CARRYING OUT A LANE CHANGE ON A SLOW-DOWN LANE BY MEANS OF AN ASSISTANCE SYSTEM, COMPUTER PROGRAM PRODUCT AND ASSISTANCE SYSTEM
PROCÉDÉ DE MISE EN UVRE D'UN CHANGEMENT DE VOIE SUR UNE BANDE DE FREINAGE AU MOYEN D'UN SYSTÈME D'AIDE, PRODUIT PROGRAMME INFORMATIQUE, AINSI QUE SYSTÈME D'AIDE

(30) Priorität: 28.06.2021 DE 102021206694
(43) Veröffentlichungstag der Anmeldung: 04.01.2023
(73) Patentinhaber: VOLKSWAGEN AG, 38440 Wolfsburg (DE)
(72) Erfinder: Münning, Daniel, 38124 Braunschweig (DE); Detering, Stefan, 38110 Braunschweig (DE)

(56) Entgegenhaltungen:
- DE-A1-102016 216 135
- DE-A1-102019 127 410
- US-A1- 2017 225 711
- US-A1- 2019 176 831

## Beschreibung

Die Erfindung betrifft ein Verfahren zum Durchführen eines Spurwechsels auf einen Verzögerungsstreifen einer Fahrspur mittels eines Assistenzsystems eines zumindest teilweise assistiert betriebenen Kraftfahrzeugs, bei welchem in Abhängigkeit von einer Fahrereingabe an einer Spurwechselbetätigungseinrichtung des Assistenzsystems auf einem Fahrstreifen der Fahrspur zumindest teilweise assistiert in eine Beschleunigungseinrichtung des Assistenzsystems eingegriffen wird und der Spurwechsel von dem Fahrstreifen auf den Verzögerungsstreifen zumindest teilweise assistiert durchgeführt wird. Ferner betrifft die Erfindung ein Computerprogrammprodukt sowie ein Assistenzsystem.

Aus dem Stand der Technik sind bereits Kraftfahrzeuge bekannt, welche zumindest teilweise assistiert betrieben werden können. Hierbei hat ein Fahrer die Fahraufgabe im Kraftfahrzeug, wobei entsprechende Bewegungen zumindest teilweise assistiert durch ein Assistenzsystem durchgeführt werden können. Hierzu sind bereits Fahrstreifenwechselassistenten bekannt, bei welchen durch eine Betätigung des Fahrers einer Spurwechselbetätigungseinrichtung, beispielsweise einer Blinkereinrichtung, ein Spurwechsel zumindest teilweise assistiert durchgeführt werden kann. Insbesondere beispielsweise auf Autobahnen oder Landstraßen mit mehreren Fahrstreifen kann der Spurwechselassistent bereitgestellt werden. Bei Autobahnen beziehungsweise bei Landstraßen mit mehreren Fahrspuren sind ferner sogenannte Ausfahrten beziehungsweise Verzögerungsstreifen bekannt, bei welchen das Kraftfahrzeug wiederum die Autobahn beziehungsweise die Landstraße entsprechend verlassen kann. Hierbei ist ebenfalls durch den Fahrer beziehungsweise das Kraftfahrzeug ein Blinker zu setzen, um dem teilnehmenden Verkehr anzuzeigen, dass ein Ausfahren des Kraftfahrzeugs gewünscht ist. Insbesondere ist jedoch auf Autobahnen beziehungsweise Landstraßen zwischen einem Spurwechsel auf die entsprechenden normalen Fahrstreifen oder auf die Ausfahrten beziehungsweise Verzögerungsstreifen zu unterscheiden. Insbesondere jedoch bei der Ausfahrt beziehungsweise der Ausfahrt auf den Verzögerungsstreifen setzt wiederum der Fahrer den Blinker, wobei in diesem Moment oftmals in der Regel noch nicht auf den Verzögerungsstreifen gewechselt werden darf, da die Spurmarkierung neben dem Kraftfahrzeug noch durchgezogen ist und neben dem Kraftfahrzeug der Standstreifen ist. Somit ist der Fahrspurwechsel gemäß dem Stand der Technik, wie er beispielsweise auf einen anderen Fahrstreifen durchzuführen ist, nicht anwendbar auf den Verzögerungsstreifen.

Die US 2003/204299 A1 offenbart ein Steuersystem für ein Kraftfahrzeug, wie zum Beispiel ein adaptives Geschwindigkeitsregelsystem, mit einem Navigationssystem. Das Navigationssystem umfasst ein globales Positionierungssystem. Das Navigationssystem detektiert eine Rampe und erzeugt ein Navigationssignal, das Navigationsdaten und Kartendaten enthält. Ein Controller ist elektrisch mit dem Navigationssystem gekoppelt. Das Steuergerät stellt in Reaktion auf das Navigationssignal die Geschwindigkeit des Kraftfahrzeugs ein.

Gemäß der US 2017076607 A1 wird ein Verfahren für organisierte intelligente Zusammenführungs-Benachrichtigungen bereitgestellt. Das Verfahren umfasst das Identifizieren einer Zusammenführungsöffnung mit Hilfe eines Prozessors. Zusammenführungsparameter für ein sich der Zusammenführungsöffnung näherndes Fahrzeug werden über ein Netzwerk empfangen. Simulationen des Verkehrs, der sich durch die Zusammenführungsöffnung bewegt, werden vom Prozessor auf der Grundlage der empfangenen Parameter des zusammenführenden Fahrzeugs durchgeführt. Die Simulationen werden vom Prozessor optimiert, um einen Zusammenführungsabstand für das zusammenführende Fahrzeug zu bestimmen. Basierend auf der Zusammenführungs-Distanz wird vom Prozessor eine Zusammenführungs-Benachrichtigung für das zusammenführende Kraftfahrzeug erzeugt.

Gemäß der US 2020189598 A1 werden Technologien und Techniken zur automatischen Vorbereitung und/oder Durchführung eines möglichen Spurwechsels mit einem im fließenden Verkehr fahrenden Ego-Fahrzeug von einer ersten auf eine zweite Spur einer mehrspurigen Fahrbahn mittels eines Fahrerassistenzsystems vorgeschlagen. Es werden Lücken zwischen zwei Fahrzeugen erkannt, und die relativen Positionen und Bewegungen der Lücken relativ zum Ego-Fahrzeug ermöglichen einen möglichen Spurwechsel des Ego-Fahrzeugs. Das Fahrerassistenzsystem passt den Folgeabstand und/oder die Folgegeschwindigkeit des Ego-Fahrzeugs relativ zum vorausfahrenden Fahrzeug so an, dass ein Spurwechsel und ein Einmünden in eine Lücke einer Nachbarspur durch eine Querführung des Ego-Fahrzeugs ermöglicht ist.

Die DE 10 2016 216 135 A1 betrifft ein Spurwechselassistenzsystem für ein Kraftfahrzeug zum automatisierten Durchführen eines Spurwechsels mit zumindest automatisierter Querführung. Das Assistenzsystem ist eingerichtet, aufgrund von Information eines Navigationssystems zur Zielführung festzustellen, dass mehrere Spurwechsel ausgehend von der aktuellen Fahrspur auf eine Zielfahrspur erforderlich sind, um der Zielführung zu folgen. Das Fahrerassistenzsystem ist ferner eingerichtet, den Fahrer über ein Erfordernis zum Spurwechsel zu informieren. Durch eine fahrerseitige Auslöse-Bedienhandlung kann der Fahrer anzeigen, dass er die erforderliche Anzahl der Spurwechsel durchführen will, um der aktiven Zielführung zu folgen. Das Fahrerassistenzsystem prüft, ob eine derartige fahrerseitige Auslöse-Bedienhandlung zum Auslösen der erforderlichen mehrfachen Spurwechsel vorliegt. Falls festgestellt wird, dass die Auslöse-Bedienhandlung des Fahrers vorliegt, werden die erforderlichen mehreren Spurwechsel ausgehend von der aktuellen Fahrspur auf eine Zielfahrspur mit zumindest automatisierter Querführung automatisiert seitens des Spurwechselassistenzsystems durchgeführt.

Die DE 10 2019 127 410 A1 beschreibt ein Verfahren zur automatischen Unterstützung eines Kraftfahrzeugs für ein Befahren einer Ausfahrt einer übergeordneten Straße, wobei eine aktuelle Position des Kraftfahrzeugs ermittelt wird, wobei ein unmittelbar bevorstehendes Befahren der Ausfahrt erkannt wird, wobei aus einer ersten Datenbank anhand der aktuellen Position geometrische Daten der Ausfahrt bezogen werden, wobei eine aktuelle Information hinsichtlich einer Fahrbahnbeschaffenheit der Ausfahrt und/oder hinsichtlich einer Verkehrssituation in der Ausfahrt erfasst und/oder anhand der aktuellen Position aus einer zweiten Datenbank bezogen wird, wobei anhand der geometrischen Daten der Ausfahrt sowie anhand der aktuellen Information hinsichtlich der Fahrbahnbeschaffenheit der Ausfahrt bzw. hinsichtlich der Verkehrssituation in der Ausfahrt eine kritische Geschwindigkeit für das Befahren der Ausfahrt durch das Kraftfahrzeug und/oder ein Parameter für ein Kurvenverhalten des Kraftfahrzeugs ermittelt wird, und wobei in Abhängigkeit der ermittelten kritischen Geschwindigkeit und/oder des ermittelten Parameters für ein Kurvenverhalten wenigstens ein Warnsignal ausgegeben wird und/oder ein Bremsvorgang angesteuert wird.

Aufgabe der vorliegenden Erfindung ist es, ein Verfahren, ein Computerprogrammprodukt sowie ein Assistenzsystem zu schaffen, mittels welchen ein verbesserter Spurwechsel auf einen Verzögerungsstreifen ermöglicht ist.

Diese Aufgabe wird durch ein Verfahren, ein Computerprogrammprodukt sowie ein Assistenzsystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Durchführen eines Spurwechsels auf einen Verzögerungsstreifen einer Fahrspur mittels eines Assistenzsystems eines zumindest teilweise assistiert betriebenen Kraftfahrzeugs, bei welchem in Abhängigkeit von einer Fahrereingabe an einer Spurwechselbetätigungseinrichtung des Assistenzsystems auf einem Fahrstreifen der Fahrspur zumindest teilweise assistiert in eine Beschleunigungseinrichtung des Assistenzsystems eingegriffen wird und ein Spurwechsel von dem Fahrstreifen auf den Verzögerungsstreifen zumindest teilweise assistiert durchgeführt wird.

Es ist dabei vorgesehen, dass mittels einer Schwarmdatenempfangseinrichtung des Assistenzsystems Schwarmdaten von zumindest einem weiteren Kraftfahrzeug, welches einen vergangenen Spurwechsel auf den Verzögerungsstreifen an einer Überschreitungsposition als die Schwarmdaten zwischen dem Fahrstreifen und dem Verzögerungsstreifen durchgeführt hat, empfangen werden und in Abhängigkeit von der empfangenen Überschreitungsposition eine Wechselposition zum Spurwechsel des Kraftfahrzeugs unabhängig von einer Betätigungsposition des Kraftfahrzeugs während der Fahrereingabe mittels einer elektronischen Recheneinrichtung des Assistenzsystems bestimmt wird und der Spurwechsel im Wesentlichen an der bestimmten Wechselposition durchgeführt wird.

Dadurch ist es ermöglicht, dass ein verbesserter Spurwechsel auf einen Verzögerungsstreifen einer Fahrspur realisiert werden kann. Insbesondere weist die Fahrspur zumindest den Fahrstreifen auf, auf welchem sich das Kraftfahrzeug aktuell befindet. Ferner weist die Fahrspur einen Verzögerungsstreifen auf, auf welchen das Kraftfahrzeug beispielsweise wechseln möchte. Der Verzögerungsstreifen kann sich dabei bereits neben dem Kraftfahrzeug befinden oder auch erst zukünftig neben dem Kraftfahrzeug befinden. Durch Betätigung der Spurwechselbetätigungseinrichtung kann dem Assistenzsystem signalisiert werden, dass ein zukünftiger Spurwechsel auf den Verzögerungsstreifen gewünscht ist. Es wird nun auf Basis der Schwarmdaten und insbesondere auf Basis der Überschreitungsposition von dem zumindest einen weiteren Kraftfahrzeug die Wechselposition ermittelt, an welcher das Kraftfahrzeug auf den Verzögerungsstreifen einscheren kann.

Bei den Schwarmdaten handelt es sich insbesondere um historische Daten, welche in der Vergangenheit liegen und beispielsweise auf Basis von einer Vielzahl von weiteren Kraftfahrzeugen erzeugt wurde. Insbesondere werden somit die Überschreitungspositionen von einer Vielzahl von Kraftfahrzeugen gesammelt, an welchen diese wiederum von dem Fahrstreifen auf den Verzögerungsstreifen gefahren sind. Beispielsweise kann dann wiederum auf Basis der unterschiedlichen Überschreitungspositionen ein Mittelwert gebildet werden, welcher als Wechselposition bestimmt wird.

Bei der Fahrspur kann es sich um eine autobahnähnliche oder um eine landstraßenähnliche Fahrspur handeln. Beispielsweise kann die Fahrspur einen oder mehrere parallel zueinander verlaufende Fahrstreifen aufweisen. Die Fahrspur ist dabei insbesondere über eine durchgezogene Linie, beispielsweise zu einem Standstreifen, begrenzt. Der Verzögerungsstreifen kann sich dann an den Standstreifen anschließen. Insbesondere darf die durchgezogene Linie zum Standstreifen nur bei einem Notmanöver und nicht bei einem Spurwechsel überfahren werden.

Bei der Spurwechselbetätigungseinrichtung kann es sich beispielsweise um eine Blinkereinrichtung des Kraftfahrzeugs handeln. Insbesondere bereits vor dem eigentlichen Spurwechsel kann somit der Wunsch des Fahrers geäußert werden, dass ein Spurwechsel durchgeführt werden soll. Bei der Beschleunigungseinrichtung kann es sich insbesondere um eine Längsbeschleunigungseinrichtung und/oder um eine Querbeschleunigungseinrichtung handeln. Bei der Querbeschleunigungseinrichtung können sogenannte Lenkmanöver durchgeführt werden, um beispielsweise die Positionen des Kraftfahrzeugs relativ zu einem jeweiligen Fahrstreifen zu verändern. Bei der Längsbeschleunigungseinrichtung kann es sich um eine Brems- beziehungsweise um eine Beschleunigungseinrichtung handeln.

Insbesondere ist die Wechselposition derart zu verstehen, dass möglichst zu Beginn des Verzögerungsstreifens der Spurwechsel durchgeführt werden kann. In Abhängigkeit der Umgebung kann jedoch dieser Zeitpunkt beziehungsweise diese Wechselposition für den Spurwechsel variieren.

Insbesondere unterscheidet sich somit das erfindungsgemäße Assistenzsystem von einem aus dem Stand der Technik bekannten Spurwechselassistenzsystem dadurch, dass durch Betätigen der Spurwechselbetätigungseinrichtung nicht der Spurwechsel sofort initiiert wird, sondern die Wechselposition auf den Verzögerungsstreifen erst bestimmt wird. Unter unabhängig von der Betätigungsposition ist somit zu verstehen, dass ein zukünftiger Spurwechsel auf den Verzögerungsstreifen gewünscht ist, jedoch dies nicht direkt oder in einem direkten Zeitschritt danach erfolgen soll, sondern dass lediglich dem Assistenzsystem mitgeteilt wird, dass ein zukünftiger Spurwechsel auf den verzögerungsstreifen gewünscht ist und sobald der Verzögerungsstreifen befahrbar ist, ein Spurwechsel gewünscht ist.

Unter dem Spurwechsel, welcher im Wesentlichen an der Wechselposition durchgeführt wird, ist insbesondere zu verstehen, dass das Kraftfahrzeugs möglichst in einem vorgegebene Bereich um die Wechselposition herum den Spurwechsel vollzieht.

Gemäß einer vorteilhaften Ausgestaltungsform wird zumindest während des Spurwechsels eine Umgebung des Kraftfahrzeugs mittels einer Umgebungserfassungseinrichtung des Assistenzsystems erfasst. Beispielsweise kann das Assistenzsystem eine Kameraeinrichtung und/oder eine Lidarsensoreinrichtung und/oder Radarsensoreinrichtung und/oder eine Ultraschallsensoreinrichtung aufweisen. Auf Basis dieser Erfassungseinrichtungen kann dann die Umgebung zuverlässig erfasst werden. Dadurch ist es beispielsweise möglich, dass während des Spurwechsels die Umgebung beobachtet wird und beispielsweise entsprechende Manöver eingeleitet werden können, um eine Kollision mit weiteren Kraftfahrzeugen zu verhindern. Ferner kann zuverlässig beispielsweise der Verzögerungsstreifen erfasst werden, so dass ein Spurwechsel durchgeführt werden kann.

Weiterhin vorteilhaft ist, wenn zumindest ein erfasstes, nochmals weiteres Kraftfahrzeug in der Umgebung, insbesondere auf dem Verzögerungsstreifen, bei der Bestimmung der Wechselposition berücksichtigt wird. Sollte beispielsweise sich ein nochmals weiteres Kraftfahrzeug bereits auf dem Verzögerungsstreifen befinden, so kann die Position und insbesondere die Geschwindigkeit dieses nochmals weiteren Kraftfahrzeugs berücksichtigt werden, so dass der Spurwechsel sicher durchgeführt werden kann. Sollte beispielsweise der Verzögerungsstreifen auch als Beschleunigungsstreifen, insbesondere auch als Auffahrt auf die Fahrspur dienen, so kann auch der sogenannte nachfolgende Verkehr, welcher auf die Fahrspur wechseln möchte, ebenfalls mitberücksichtigt werden, so dass kritische Situationen im Straßenverkehr verhindert werden können.

Ferner hat es sich als vorteilhaft erwiesen, wenn eine aktuelle Geschwindigkeit des Kraftfahrzeugs und/oder ein Verzögerungspotential des Kraftfahrzeugs und/oder aktuelle Wetterverhältnisse bei der Bestimmung der Wechselposition berücksichtigt werden. Insbesondere ist es dadurch ermöglicht, dass beispielsweise ein entsprechendes Bremsmoment bereits vorher bestimmt wird, um eine Endgeschwindigkeit am Verzögerungsstreifen zu erreichen. Hierzu ist die aktuelle Geschwindigkeit von Bedeutung, da dadurch bestimmt werden kann, mit welchem Bremsmoment gebremst werden muss. Ferner kann auch ein Verzögerungspotential, also mit welcher die Kraft die Bremsung durchgeführt werden kann, berücksichtigt werden, so dass zuverlässig auf eine Endgeschwindigkeit am Verzögerungsstreifen gebremst werden kann. Ebenfalls kann beispielsweise auch ein maximales Lenkmoment berücksichtigt werden, um die Wechselposition zuverlässig bestimmen zu können. Auch können Wetterverhältnisse, beispielsweise ob die Fahrspur beziehungsweise der Verzögerungsstreifen nass oder mit Laub bedeckt ist, ebenfalls mitberücksichtigt werden, da insbesondere dann weniger Bremsmoment aufgewendet werden kann, um am Ende des Verzögerungsstreifens die entsprechende Endgeschwindigkeit zu erreichen. Somit kann zuverlässig und sicher ein Spurwechsel auf den Verzögerungsstreifen durchgeführt werden.

In einer weiteren vorteilhaften Ausgestaltungsform wird in Abhängigkeit von einer geplanten Fahrroute des Kraftfahrzeugs dem Fahrer eine Betätigung der Spurwechselbetätigungseinrichtung auf einer Ausgabeeinrichtung des Assistenzsystems vorgeschlagen. Insbesondere kann das Kraftfahrzeug hierzu beispielsweise über eine Navigationseinrichtung verfügen, in welcher eine entsprechende Fahrroute vorgegeben wird. Sollte nun die entsprechende Ausfahrt zum Erreichen des Fahrziels genutzt werden, so kann dies dem Fahrer auf der Ausgabeeinrichtung angezeigt werden. Durch Betätigung der Spurwechselbetätigungseinrichtung kann dann wiederum das Durchführen des Spurwechselmanövers initiiert werden. Dadurch kann höchst komfortabel der Fahrer des Kraftfahrzeugs zu seinem Navigationsziel geführt werden.

Ferner hat es sich als vorteilhaft erwiesen, wenn eine Ausgestaltungsart des Verzögerungsstreifens, insbesondere eine Form des Verzögerungsstreifens und/oder eine vorgegebene Endgeschwindigkeit beim Verlassen des Verzögerungsstreifens und/oder eine Länge des Verzögerungsstreifens und/oder eine zusätzliche Ausgestaltungsform des Verzögerungsstreifens als Beschleunigungsstreifen, beim Bestimmen der Wechselposition berücksichtigt werden. Somit ist es ermöglicht, dass auch die Ausgestaltungsart mit Einfluss nimmt, an welcher Stelle die Wechselposition bestimmt wird. Insbesondere, sollte beispielsweise der Verzögerungsstreifen sehr kurz ausgebildet sein, so ist vorgesehen, dass die Wechselposition sehr frühzeitig bestimmt wird. Sollte beispielsweise der Verzögerungsstreifen auch als Beschleunigungsstreifen ausgebildet sein, so kann eine entsprechende Wechselposition erst später bestimmt werden, da insbesondere auch auf den auffahrenden Verkehr Rücksicht genommen werden muss. Ferner kann auch berücksichtigt werden, ob der Verzögerungsstreifen in einer Kurve ausgebildet ist oder ob am Ende des Verzögerungsstreifens eine entsprechend scharfe Kurve mit einer Geschwindigkeitsbegrenzung vorliegt. Dadurch ist es ermöglicht, dass ein sicherer Spurwechsel auf den Verzögerungsstreifen realisiert werden kann.

In einer weiteren vorteilhaften Ausgestaltungsform wird mittels der elektronischen Recheneinrichtung eine Standardabweichung der Schwarmdaten bezüglich der Überschreitungsposition bestimmt, und die bestimmte Standardabweichung wird bei der Bestimmung der Wechselposition berücksichtigt. Bevorzugt kann die Standardabweichung auf einer kraftfahrzeugexternen elektronischen Recheneinrichtung bestimmt werden. Auf Basis der Standardabweichung kann insbesondere zuverlässig die Wechselposition bestimmt werden. Insbesondere, sollte beispielsweise die Vielzahl von weiteren Kraftfahrzeugen an unterschiedlichen Überschreitungspositionen auf den Verzögerungsstreifen gewechselt sein, so kann auf Basis der Standardabweichung ein "Fenster" bestimmt werden, in welchem die Wechselposition liegen kann. Auf Basis dessen kann dann wiederum zuverlässig die Wechselposition bestimmt werden.

Gemäß einer weiteren vorteilhaften Ausgestaltungsform wird zeitlich vor dem Durchführen des Spurwechsels eine assistierte Positionierung des Kraftfahrzeugs auf dem Fahrstreifen für den Spurwechsel durchgeführt. Sollte beispielsweise sich das Kraftfahrzeug auf dem Fahrstreifen relativ zum Fahrstreifen gesehen links befinden, so kann vor dem eigentlichen Spurwechsel eine mittige Positionierung des Kraftfahrzeugs realisiert werden, so dass beim Spurwechsel dann wiederum ein verbesserter Spurwechsel durchgeführt werden kann. Somit kann ein großer Querabstand beim Spurwechsel zu dem Verzögerungsstreifen verhindert werden. Insbesondere handelt es sich somit um eine Sollkursverschiebung in die Fahrstreifenmitte, bereits vor Beginn des assistierten Spurwechsels als Vorbereitung des Kraftfahrzeugs.

Bei dem vorgestellten Verfahren handelt es sich um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein entsprechendes Verfahren durchzuführen. Ein nochmals weiterer Aspekt betrifft daher auch ein computerlesbares Speichermedium mit dem Computerprogrammprodukt.

Ferner betrifft die Erfindung auch ein Assistenzsystem zum Durchführen eines Spurwechsels auf einen Verzögerungsstreifen einer Fahrspur mit zumindest einer Betätigungseinrichtung, mit einer Beschleunigungseinrichtung, mit einer Schwarmdatenempfangseinrichtung und mit einer elektronischen Recheneinrichtung, wobei das Assistenzsystem zum Durchführen eines Verfahrens nach dem vorhergehenden Aspekt ausgebildet ist. Insbesondere wird das Verfahren mittels des Assistenzsystems durchgeführt.

Die elektronische Recheneinrichtung weist insbesondere elektronische Bauteile, wie Prozessoren und integrierte Schaltkreise auf, um ein entsprechendes Verfahren durchführen zu können.

Ein nochmals weiterer Aspekt der Erfindung betrifft ein Kraftfahrzeug mit einem Assistenzsystem nach dem vorhergehenden Aspekt. Das Kraftfahrzeug ist insbesondere zumindest teilweise assistiert ausgebildet.

Zu der Erfindung gehören auch Weiterbildungen des erfindungsgemäßen Assistenzsystems eines erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Assistenzsystems und des erfindungsgemäßen Kraftfahrzeugs hier nicht noch einmal beschrieben.

Die Erfindung umfasst auch die Kombinationen der Merkmale der beschriebenen Ausführungsformen.

Im Folgenden werden Ausführungsbeispiele der Erfindung beschrieben. Hierzu zeigt:
Fig. 1 eine schematische Draufsicht auf eine Ausführungsform eines Kraftfahrzeugs mit einer Ausführungsform eines Assistenzsystems; und
Fig. 2 ein schematisches Ablaufdiagramm gemäß einer Ausführungsform des Verfahrens.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

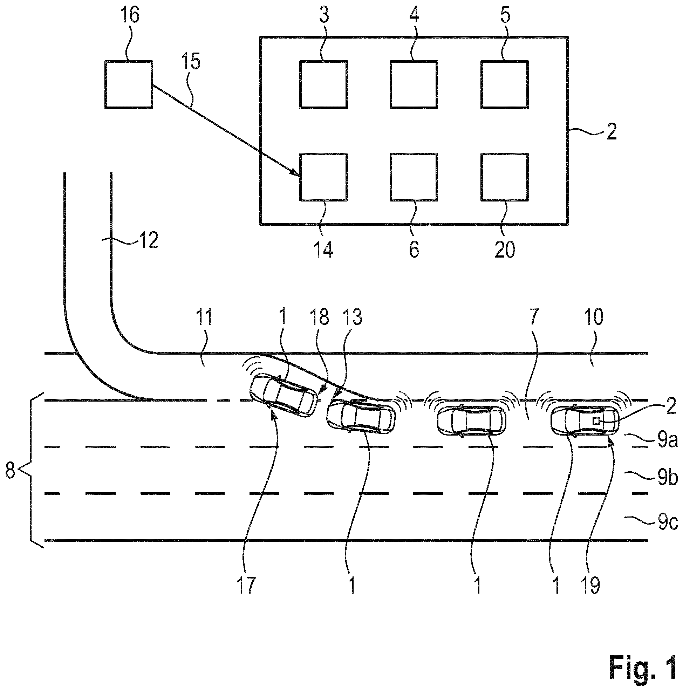

Fig. 1 zeigt eine schematische Draufsicht auf eine Ausführungsform eines Kraftfahrzeugs 1 mit einer Ausführungsform eines Assistenzsystems 2. Das Assistenzsystem 2 ist vorliegend in einer vergrößerten Ansicht gezeigt. Das Assistenzsystem 2 weist zumindest eine Beschleunigungseinrichtung 5, insbesondere eine Querbeschleunigungseinrichtung und/oder eine Längsbeschleunigungseinrichtung, eine elektronische Recheneinrichtung 4, eine Spurwechselbetätigungseinrichtung 3 sowie insbesondere zumindest eine Umgebungserfassungseinrichtung 6 zum Erfassen einer Umgebung 7 des Kraftfahrzeugs 1 auf. Ferner weist das Assistenzsystem 2 eine Schwarmdatenempfangseinrichtung 14 auf. Insbesondere kann vorgesehen sein, dass mittels der Schwarmdatenempfangseinrichtung 14 Schwarmdaten 15 von einer kraftfahrzeugexternen elektronischen Recheneinrichtung 16 empfangen werden können.

Ferner ist insbesondere gezeigt, dass das Kraftfahrzeug 1 sich vorliegend in unterschiedlichen Positionen befindet, wobei dies insbesondere eine zeitliche Abfolge von rechts nach links darstellt. Das Kraftfahrzeug 1 befindet sich vorliegend auf einer Fahrspur 8 mit drei Fahrstreifen 9a, 9b, 9c. Das Kraftfahrzeug 1 befindet sich vorliegend auf einem rechten Fahrstreifen 9a. Ferner ist ein mittlerer Fahrstreifen 9b sowie ein linker Fahrstreifen 9c gezeigt. Die Fahrspur 8 weist vorliegend insbesondere ferner einen Standstreifen 10 sowie einen Verzögerungsstreifen 11 auf. Insbesondere bildet der Verzögerungsstreifen 11 eine Verlängerung des Standstreifens 10 beziehungsweise schließt sich an den Standstreifen 10 an. Insbesondere ist es für das Kraftfahrzeug 1 nicht erlaubt, auf den Standstreifen 10 zu fahren, außer es handelt sich um einen Notfall. Um eine entsprechende Ausfahrt 12 der Fahrspur 8 zu erreichen, ist der Verzögerungsstreifen 11 vorgesehen, welcher, wie bereits erwähnt, die Verlängerung des Standstreifens 10 bildet. Ein Spurwechsel 13 ist somit nicht auf den Standstreifen 10 erlaubt, jedoch auf den Verzögerungsstreifen 11.

Insbesondere zeigt die Fig. 1, dass mittels des Assistenzsystems 2 insbesondere ein Verfahren zum Durchführen des Spurwechsels 13 auf den Verzögerungsstreifen 11 durchgeführt werden kann. Der Spurwechsel 13 ist dabei insbesondere zumindest teilweise assistiert durchgeführt. Es wird dabei in Abhängigkeit von einer Fahrereingabe an der Spurwechselbetätigungseinrichtung 3 des Assistenzsystems 2 auf dem Fahrstreifen 9a, 9b, 9c der Fahrspur 8 zumindest teilweise assistiert in die Beschleunigungseinrichtung 5 eingegriffen, und es wird der Spurwechsel 13 von dem Fahrstreifen 9a, 9b, 9c auf den Verzögerungsstreifen 11 zumindest teilweise assistiert durchgeführt.

Dabei ist vorgesehen, dass mittels der Schwarmdatenempfangseinrichtung 14 des Assistenzsystems 2 die Schwarmdaten 15 von zumindest einem weiteren Kraftfahrzeug, welches einen vergangenen Spurwechsel auf den Verzögerungsstreifen 11, insbesondere in der Vergangenheit an einer Überschreitungsposition 17 als die Schwarmdaten 15 zwischen dem Fahrstreifen 9a, 9b, 9c und dem Verzögerungsstreifen 11 durchgeführt hat, empfangen werden, und in Abhängigkeit von der empfangenen Überschreitungsposition 17 eine Wechselposition 18 zum Spurwechsel 13 des Kraftfahrzeugs 1 unabhängig von einer Betätigungsposition 19 des Kraftfahrzeugs 1 während der Fahrereingabe mittels der elektronischen Recheneinrichtung 4 des Assistenzsystems 2 bestimmt wird und der Spurwechsel 13 im Wesentlichen an der bestimmten Wechselposition 18 durchgeführt wird.

Insbesondere kann vorgesehen sein, dass zumindest während des Spurwechsels 13 die Umgebung 7 des Kraftfahrzeugs 1 mittels der Umgebungserfassungseinrichtung 6 des Assistenzsystems 2 erfasst wird. Beispielsweise kann dabei zumindest ein erfasstes nochmals weiteres Kraftfahrzeug in der Umgebung 7, insbesondere auf dem Verzögerungsstreifen 11, bei der Bestimmung der Wechselposition 13 berücksichtigt werden. Ferner ist insbesondere vorgesehen, dass eine aktuelle Geschwindigkeit des Kraftfahrzeugs 1 und/oder ein Verzögerungspotential des Kraftfahrzeugs 1 und/oder aktuelle Wetterverhältnisse bei der Bestimmung der Wechselposition 13 berücksichtigt werden.

Des Weiteren kann vorgesehen sein, dass in Abhängigkeit von einer geplanten Fahrroute des Kraftfahrzeugs 1 dem Fahrer eine Betätigung der Spurwechselbetätigungseinrichtung 3 auf einer Ausgabeeinrichtung 20 des Assistenzsystems 2 vorgeschlagen wird.

Des Weiteren ist insbesondere vorgesehen, dass eine Ausgestaltungsart des Verzögerungsstreifens 11, insbesondere eine Form des Verzögerungsstreifens 11 und/oder eine vorgegebene Endgeschwindigkeit beim Verlassen des Verzögerungsstreifens 11 und/oder eine Länge des Verzögerungsstreifens 11 und/oder eine zusätzliche Ausgestaltungsform des Verzögerungsstreifens 11 als Beschleunigungsstreifen, beim Bestimmen der Wechselposition 18 berücksichtigt wird. Ferner kann auch mittels der elektronischen Recheneinrichtung 4 eine Standardabweichung der Schwarmdaten 15 bezüglich der Überschreitungsposition (17) bestimmt werden und die bestimmte Standardabweichung bei der Bestimmung der Wechselposition 18 berücksichtigt werden.

Des Weiteren kann vorgesehen sein, dass zeitlich vor dem Durchführen des Spurwechsels 13 eine assistierte Positionierung des Kraftfahrzeugs 1 auf dem Fahrstreifen 9a, 9b, 9c für den Spurwechsel 13 durchgeführt wird.

Beispielsweise zeigt die Fig. 1, dass der Verzögerungsstreifen 11 vorliegend sehr kurz dargestellt ist und mit einer starken Krümmung versehen ist. Das Kraftfahrzeug 1 kann beispielsweise mit einer Zielgeschwindigkeit in die entsprechende Ausfahrt fahren, was beispielsweise 40 km/h sein soll, und das Kraftfahrzeug 1 soll den Spurwechsel 13 mit zum Beispiel einer Zielgeschwindigkeit von 80 km/h durchführen. Somit muss das Kraftfahrzeug 1 auf der zur Verfügung stehenden Länge des Verzögerungsstreifens 11 von 80 km/h auf 40 km/h abgebremst werden. Die maximale Verzögerung des Assistenzsystems 2 lässt beispielsweise lediglich 3 m/s² zu, so dass es sinnvoll sein kann, dass das Kraftfahrzeug 1 früher als zum Beispiel die entsprechenden Schwarmdaten 15, also insbesondere früher als die Überschreitungsposition 17, auf den Verzögerungsstreifen 11 wechselt, um dort mehr Strecke zum Abbau der Geschwindigkeit zur Verfügung zu haben.

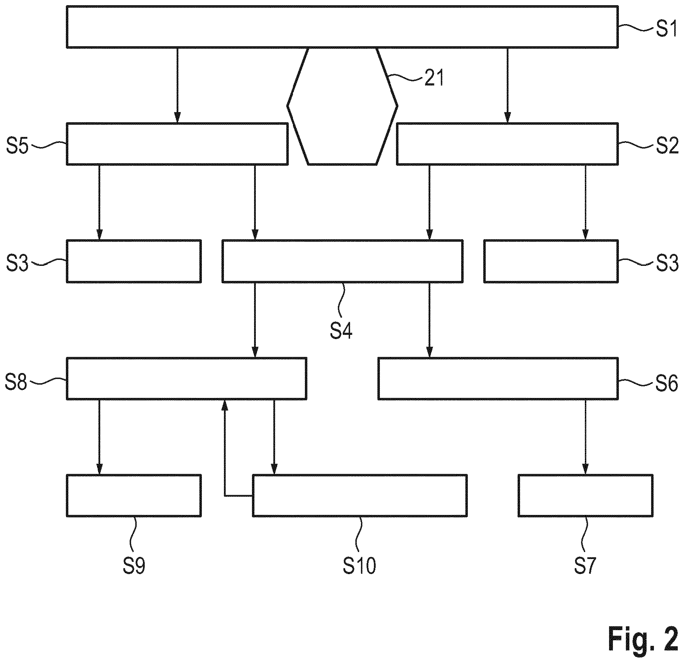

Fig. 2 zeigt ein schematisches Ablaufdiagramm gemäß einer Ausführungsform eines erfindungsgemäßen Verfahrens. In einem ersten Schritt S1 kann vorliegend überprüft werden, ob beispielsweise eine Routenführung eines Navigationssystems aktiv ist. Hierzu kann ebenfalls eine digitale Karte 21 vorgesehen sein. Sollte keine Routenführung aktiv sein, so kann in einem zweiten Schritt S2 überprüft werden, ob der Fahrer des Kraftfahrzeugs 1 die Spurwechselbetätigungseinrichtung 3 nach rechts betätigt hat, beispielsweise eine Blinkereinrichtung des Kraftfahrzeugs 1. Sollte dies nicht der Fall sein, so kann in einem dritten Schritt S3 davon ausgegangen werden, kein Spurwechsel 13 durchgeführt werden soll und das Assistenzsystem 2 kann weiterhin für einen Fahrstreifenwechsel zur Verfügung stehen. Sollte die entsprechende Ausfahrt beziehungsweise der Verzögerungsstreifen 11 erkannt werden und der Fahrer befindet sich auf der rechten Fahrspur 9a, so kann das vorgestellte Verfahren zum Spurwechsel 13 auf den Verzögerungsstreifen 11 durchgeführt werden, was vorliegend durch einen vierten Schritt S4 dargestellt ist.

Sollte die Routenführung aktiv sein, so kann in einem fünften Schritt S5 ausgehend vom ersten Schritt S1 beispielsweise dem Fahrer vorgeschlagen werden, dass dieser den zukünftigen Verzögerungsstreifen 11 aufgrund der Fahrroute nutzen soll und hier beispielsweise auf der Ausgabeeinrichtung 20 anzeigen, dass die Spurwechselbetätigungseinrichtung 3 betätigt werden soll. Sollte dies nicht der Fall sein, so kann wiederum das Assistenzsystem 2 für einen Fahrstreifenwechsel auf der Fahrspur 8 zur Verfügung stehen. Sollte dies der Fall sein, so kann ausgehend vom fünften Schritt S5 in den vierten Schritt S4 übergegangen werden, also in den entsprechenden Modus zum Spurwechsel 13 auf dem Verzögerungsstreifen 11. Im vierten Schritt S4 kann dann überprüft werden, ob entsprechende Schwarmdaten 15 vorliegen. Sollte dies nicht der Fall sein, so kann in einen sechsten Schritt S6 übergegangen werden, wobei hierbei eine entsprechende Spurwechselposition beispielsweise in Abhängigkeit von der digitalen Karte 1 bestimmt werden können. Es kann dann in einem siebten Schritt S7 der Spurwechsel 13 auf Basis der digitalen Karte 21 durchgeführt werden. Sollten die Schwarmdaten 15 vorliegen, so kann ausgehend vom vierten Schritt S4 in einen achten Schritt S8 übergegangen werden. Hierbei wird die Wechselposition 18 auf Basis der Schwarmdaten 15 beziehungsweise der Überschreitungsposition 17 bestimmt. Zusätzlich kann auch auf die digitale Karte 21 zurückgegriffen werden. Ausgehend vom achten Schritt S8 kann dann wiederum in einen neunten Schritt S9 übergegangen werden, welcher den assistierten Spurwechsel 13 auf Basis der Schwarmdaten 15 durchführen kann. Ferner kann ausgehend vom achten Schritt S8 in einen zehnten Schritt S10 übergegangen werden, welcher beispielsweise die Umgebung 7 weiter erfasst und die Wechselposition18 durch beispielsweise Neuberechnung auf Basis der Umgebungsdaten bestimmt.

Insbesondere kann im zehnten Schritt S10 zusätzlich auch überprüft werden, ob sich das Kraftfahrzeug 1 auf der rechten Fahrspur 9a auf einem Soll-Kurs befindet oder ob beispielsweise erst noch eine Soll-Kurs-Verschiebung, also eine Neupositionierung des Kraftfahrzeugs 1 innerhalb des rechten Fahrstreifens 9a durchzuführen ist, bevor der eigentliche Spurwechsel 13 durchgeführt wird.

Insbesondere kann ferner vorgesehen sein, dass der späteste Spurwechsel 13 nach Beginn des Verzögerungsstreifens 11 insbesondere zeitlich und örtlich begrenzt wird. Ferner kann der späteste Spurwechsel 13 vor Ende des Verzögerungsstreifens 11 zeitlich und örtlich begrenzt sein. Es kann ferner die notwendige Verzögerung auf dem Verzögerungsstreifen 11 berücksichtigt werden, um mit einer maximal definierten Querbeschleunigung eine entsprechende Kurve am Ende des Verzögerungsstreifens 11 zu durchfahren. Ferner kann zusätzlich die Standardabweichung der Schwarmtrajektorie bewertet werden. Des Weiteren können zusätzlich die umgebenden, nachfolgenden Kraftfahrzeuge berücksichtigt werden. Ebenfalls können zusätzlich die umgebenden auffahrenden Kraftfahrzeuge, insbesondere bei einer kombinierten Auf-/Abfahrt, berücksichtigt werden.

In der vorliegenden Ausführungsform ist insbesondere von einem Rechtsverkehr auszugehen. Sollte beispielsweise ein Linksverkehr vorliegen, so ist das Verfahren insbesondere entsprechend anzupassen.

## Patentansprüche

1. Verfahren zum Durchführen eines Spurwechsels (13) auf einen Verzögerungsstreifen (11) einer Fahrspur (8) mittels eines Assistenzsystems (2) eines zumindest teilweise assistiert betriebenen Kraftfahrzeugs (1), bei welchem in Abhängigkeit von einer Fahrereingabe an einer Spurwechselbetätigungseinrichtung (3) des Assistenzsystems (2) auf einem Fahrstreifen (9a, 9b, 9c) der Fahrspur (8) zumindest teilweise assistiert in eine Beschleunigungseinrichtung (5) des Assistenzsystems (2) eingegriffen wird und der Spurwechsel (13) von dem Fahrstreifen (9a, 9b, 9c) auf den Verzögerungsstreifen (11) zumindest teilweise assistiert durchgeführt wird, wobei mittels einer Schwarmdatenempfangseinrichtung (14) des Assistenzsystems (2) Schwarmdaten (15) von zumindest einem weiteren Kraftfahrzeug, welches einen vergangenen Spurwechsel auf den Verzögerungsstreifen (11) an einer Überschreitungsposition (17) als die Schwarmdaten (15) zwischen dem Fahrstreifen (9a, 9b, 9c) und dem Verzögerungsstreifen (11) durchgeführt hat, empfangen werden,
**dadurch gekennzeichnet, dass**
in Abhängigkeit von der empfangenen Überschreitungsposition (17) eine Wechselposition (18) zum Spurwechsel (13) des Kraftfahrzeugs (1) unabhängig von einer Betätigungsposition (19) des Kraftfahrzeugs (1) während der Fahrereingabe mittels einer elektronischen Recheneinrichtung (4) des Assistenzsystems (2) bestimmt wird und der Spurwechsel (13) im Wesentlichen an der bestimmten Wechselposition (18) durchgeführt wird.

2. Verfahren nach Anspruch 1,
**dadurch gekennzeichnet, dass**
zumindest während des Spurwechsels (13) eine Umgebung (7) des Kraftfahrzeugs (1) mittels einer Umgebungserfassungseinrichtung (6) des Assistenzsystems (2) erfasst wird.

3. Verfahren nach Anspruch 2,
**dadurch gekennzeichnet, dass**
zumindest ein erfasstes nochmals weiteres Kraftfahrzeug in der Umgebung (7), insbesondere auf dem Verzögerungsstreifen (11), bei der Bestimmung der Wechselposition (18) berücksichtigt wird.

4. Verfahren nach einem der vorhergehenden Ansprüche,
**dadurch gekennzeichnet, dass**
eine aktuelle Geschwindigkeit des Kraftfahrzeugs (1) und/oder ein Verzögerungspotential des Kraftfahrzeugs (1) und/oder aktuelle Wetterverhältnisse bei der Bestimmung der Wechselposition (18) berücksichtigt werden.

5. Verfahren nach einem der vorhergehenden Ansprüche,
**dadurch gekennzeichnet, dass**
in Abhängigkeit von einer geplanten Fahrroute des Kraftfahrzeugs (1) dem Fahrer eine Betätigung der Spurwechselbetätigungseinrichtung (3) auf einer Ausgabeeinrichtung (20) des Assistenzsystems (2) vorgeschlagen wird.

6. Verfahren nach einem der vorhergehenden Ansprüche,
**dadurch gekennzeichnet, dass**
eine Ausgestaltungsart des Verzögerungsstreifens (11), insbesondere eine Form des Verzögerungsstreifens (11) und/oder eine vorgegebene Endgeschwindigkeit beim Verlassen des Verzögerungsstreifens (11) und/oder eine Länge des Verzögerungsstreifens (11) und/oder eine zusätzliche Ausgestaltungsform des Verzögerungsstreifens (11) als Beschleunigungsstreifen, beim Bestimmen der Wechselposition (18) berücksichtigt wird.

7. Verfahren nach einem der vorhergehenden Ansprüche,
**dadurch gekennzeichnet, dass**
mittels der elektronischen Recheneinrichtung (4) und/oder mittels einer kraftfahrzeugexternen elektronischen Recheneinrichtung (16) eine Standardabweichung der Schwarmdaten (15) bezüglich der Überschreitungsposition (17) bestimmt wird und die bestimmte Standardabweichung bei der Bestimmung der Wechselposition (18) berücksichtigt wird.

8. Verfahren nach einem der vorhergehenden Ansprüche,
**dadurch gekennzeichnet, dass**
zeitlich vor dem Durchführen des Spurwechsels (13) eine assistierte Positionierung des Kraftfahrzeugs (1) auf dem Fahrstreifen (9a, 9b, 9c) für den Spurwechsel (13) durchgeführt wird.

9. Computerprogrammprodukt mit Programmcodemittel, welche eine elektronische Recheneinrichtung (4) eines Assistenzsystems (2) dazu veranlassen, wenn die Programmcodemittel von der elektronischen Recheneinrichtung (4) abgearbeitet werden, ein Verfahren nach einem der Ansprüche 1 bis 8 durchzuführen.

10. Assistenzsystem (2) für ein Kraftfahrzeug (1) zum Durchführen eines Spurwechsels (13) auf einen Verzögerungsstreifen (11) einer Fahrspur (8), mit zumindest einer Spurwechselbetätigungseinrichtung (3), mit einer Beschleunigungseinrichtung (5), mit einer Schwarmdatenempfangseinrichtung (14) und mit einer elektronischen Recheneinrichtung (4), wobei das Assistenzsystem (2) zum Durchführen eines Verfahrens nach einem der Ansprüche 1 bis 8 ausgebildet ist.

## Claims

1. Method for carrying out a lane change (13) into a deceleration lane (11) of a roadway (8) by means of an assistance system (2) of a motor vehicle (1) which is driven in an at least partially assisted manner, in which method, on the basis of a driver input on a lane-change actuating device (3) of the assistance system (2), intervention is carried out in an at least partially assisted manner in an acceleration device (5) of the assistance system (2) on a lane (9a, 9b, 9c) of the carriageway (8), and the lane change (13) is carried out in an at least partially assisted manner from the lane (9a, 9b, 9c) to the deceleration lane (11), swarm data (15) from at least one further motor vehicle, which has carried out a past lane change into the deceleration lane (11) at a crossing position (17) as the swarm data (15) between the lane (9a, 9b, 9c) and the deceleration lane (11), being received by means of a swarm data receiving device (14) of the assistance system (2),
**characterized in that**
on the basis of the received crossing position (17), a changing position (18) for the lane change (13) of the motor vehicle (1) is determined by means of an electronic computing device (4) of the assistance system (2) independently of an actuating position (19) of the motor vehicle (1) at the time of the driver input, and the lane change (13) is carried out substantially at the determined changing position (18).

2. Method according to claim 1,
**characterized in that**
the surroundings (7) of the motor vehicle (1) are detected by means of a surroundings-detection device (6) of the assistance system (2), at least during the lane change (13).

3. Method according to claim 2,
**characterized in that**
at least one detected additional further motor vehicle in the surroundings (7), in particular on the deceleration lane (11), is taken into account when determining the change position (18).

4. Method according to any of the preceding claims,
**characterized in that**
a current speed of the motor vehicle (1) and/or a deceleration potential of the motor vehicle (1) and/or current weather conditions are taken into account during the determination of the change position (18).

5. Method according to any of the preceding claims,
**characterized in that**
an actuation of the lane-change actuating device (3) is proposed to the driver on an output device (20) of the assistance system (2) on the basis of a planned route of the motor vehicle (1).

6. Method according to any of the preceding claims,
**characterized in that**
an embodiment of the deceleration lane (11), in particular a shape of the deceleration lane (11) and/or a predetermined final speed when leaving the deceleration lane (11) and/or a length of the deceleration lane (11) and/or an additional embodiment of the deceleration lane (11) as an acceleration lane, is taken into account when determining the change position (18).

7. Method according to any of the preceding claims,
**characterized in that**
a standard deviation of the swarm data (15) with respect to the crossing position (17) is determined by means of the electronic computing device (4) and/or by means of an electronic computing device (16) external to the motor vehicle, and the determined standard deviation is taken into account when determining the change position (18).

8. Method according to any of the preceding claims,
**characterized in that**
before the lane change (13) is carried out, an assisted positioning of the motor vehicle (1) on the lane (9a, 9b, 9c) for the lane change (13) is carried out.

9. Computer program product comprising program code means, which cause an electronic computing device (4) of an assistance system (2) to carry out a method according to any of claims 1 to 8 when the program code means are processed by the electronic computing device (4).

10. Assistance system (2) for a motor vehicle (1) for carrying out a lane change (13) into a deceleration lane (11) of a carriageway (8), comprising at least one lane-change actuating device (3), an acceleration device (5), a swarm-data receiving device (14), and an electronic computing device (4), the assistance system (2) being designed to carry out a method according to any of claims 1 to 8.

## Revendications

1. Procédé permettant de réaliser un changement de voie (13) sur une bande de décélération (11) d'une voie de circulation (8) au moyen d'un système d'assistance (2) d'un véhicule automobile (1) fonctionnant de manière au moins partiellement assistée, dans lequel, en fonction d'une entrée de conducteur sur un dispositif d'actionnement de changement de voie (3) du système d'assistance (2) sur une bande de circulation (9a, 9b, 9c) de la voie de circulation (8), une intervention est effectuée de manière au moins partiellement assistée dans un dispositif d'accélération (5) du système d'assistance (2) et le changement de voie (13) de la bande de circulation (9a, 9b, 9c) à la bande de décélération (11) est réalisé de manière au moins partiellement assistée, dans lequel, au moyen d'un dispositif de réception de données en essaim (14) du système d'assistance (2), des données en essaim (15) provenant d'au moins un autre véhicule automobile, lequel a réalisé un changement de voie passé sur la bande de décélération (11) à une position de dépassement (17) en tant que données en essaim (15) entre la bande de circulation (9a, 9b, 9c) et la bande de décélération (11), sont reçues,
**caractérisé en ce que**
en fonction de la position de dépassement (17) reçue, une position de changement (18) pour le changement de voie (13) du véhicule automobile (1) est déterminée indépendamment d'une position d'actionnement (19) du véhicule automobile (1) pendant l'entrée de conducteur au moyen d'un dispositif de calcul électronique (4) du système d'assistance (2) et le changement de voie (13) est réalisé sensiblement à la position de changement (18) déterminée.

2. Procédé selon la revendication 1,
**caractérisé en ce que**
au moins pendant le changement de voie (13), un environnement (7) du véhicule automobile (1) est détecté au moyen d'un dispositif de détection d'environnement (6) du système d'assistance (2).

3. Procédé selon la revendication 2,
**caractérisé en ce que**
au moins un autre véhicule automobile détecté de nouveau dans l'environnement (7), en particulier sur la bande de décélération (11), est pris en compte lors de la détermination de la position de changement (18).

4. Procédé selon l'une des revendications précédentes, **caractérisé en ce que**
une vitesse actuelle du véhicule automobile (1) et/ou un potentiel de décélération du véhicule automobile (1) et/ou des conditions météorologiques actuelles sont pris en compte lors de la détermination de la position de changement (18).

5. Procédé selon l'une des revendications précédentes, **caractérisé en ce que**
en fonction d'un itinéraire prévu du véhicule automobile (1), un actionnement du dispositif d'actionnement de changement de voie (3) est proposé au conducteur sur un dispositif de sortie (20) du système d'assistance (2).

6. Procédé selon l'une des revendications précédentes, **caractérisé en ce que**
un type de conception de la bande de décélération (11), en particulier une forme de la bande de décélération (11) et/ou une vitesse finale prédéterminée lors de la sortie de la bande de décélération (11) et/ou une longueur de la bande de décélération (11) et/ou une forme de conception supplémentaire de la bande de décélération (11) comme bande d'accélération, sont pris en compte lors de la détermination de la position de changement (18).

7. Procédé selon l'une des revendications précédentes, **caractérisé en ce que**
au moyen du dispositif de calcul électronique (4) et/ou au moyen d'un dispositif de calcul électronique (16) externe au véhicule automobile, un écart type des données en essaim (15) par rapport à la position de dépassement (17) est déterminé et l'écart type déterminé est pris en compte lors de la détermination de la position de changement (18).

8. Procédé selon l'une des revendications précédentes, **caractérisé en ce que**
avant la réalisation du changement de voie (13), un positionnement assisté du véhicule automobile (1) sur la bande de circulation (9a, 9b, 9c) est réalisé pour le changement de voie (13).

9. Produit programme informatique comportant des moyens de code de programme qui amènent un dispositif de calcul électronique (4) d'un système d'assistance (2) à réaliser un procédé selon l'une des revendications 1 à 8 lorsque les moyens de code de programme sont traités par le dispositif de calcul électronique (4).

10. Système d'assistance (2) pour un véhicule automobile (1) permettant de réaliser un changement de voie (13) sur une bande de décélération (11) d'une voie de circulation (8), comportant au moins un dispositif d'actionnement de changement de voie (3), comportant un dispositif d'accélération (5), comportant un dispositif de réception de données en essaim (14) et comportant un dispositif de calcul électronique (4), dans lequel le système d'assistance (2) est configuré pour réaliser un procédé selon l'une des revendications 1 à 8.
